(19) Europäisches Patentamt
European Patent Office
Office européen des brevets

(11) **EP 2 667 278 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(51) Int Cl.:
**G05D 22/02** *(2006.01)* **G05D 23/19** *(2006.01)*
**G05D 27/02** *(2006.01)* **F24F 11/00** *(2006.01)*
**G05B 13/02** *(2006.01)*

(21) Anmeldenummer: **12169484.8**

(22) Anmeldetag: **25.05.2012**

(54) **Verfahren und Vorrichtung zur Steuerung der Luftparameter in Räumen**

Method and device for controlling the air parameters in rooms

Procédé et dispositif de commande des paramètres d'air dans des pièces

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.11.2013 Patentblatt 2013/48**

(73) Patentinhaber: **GfR - Gesellschaft für Regelungstechnik und Energieneinsparung mbH 33415 Verl (DE)**

(72) Erfinder: **Sokollik, Frank 98704 Oehrenstock (DE)**

(74) Vertreter: **Reimann, Silke Patentanwaltskanzlei Backhaus Im Lohfeld 63a 33102 Paderborn (DE)**

(56) Entgegenhaltungen:
**EP-A2- 1 209 547        US-A- 4 570 448
US-A1- 2008 179 409        US-A1- 2011 264 275**

## EP 2 667 278 B1

**Beschreibung**

Die Erfindung betrifft ein Verfahren und eine Vorrichtung zur Steuerung einer Lufttemperatur und einer Luftfeuchte in Räumen mittels einer Klimaanlage mit elektronischer Steuerung, die als Luftbehandlungsaggregate mindestens einen Wärmerückgewinner und/oder eine Mischkammer enthält sowie auch optional einen Luftkühler, einen Lufterhitzer und/oder einen Luftbefeuchter, durch die unter Berücksichtigung eines in einem h-x-Diagramm definierten Behaglichkeitsgebietes Steuersignale für die Luftbehandlungsaggregate ausgegeben werden, wobei zur Durchführung des Verfahrens eine Zielfunktion zugrunde gelegt wird, deren Parameter durch spezifische, von den Steuersignalen abhängige Enthalpien der Luftbehandlungsaggregate, den Außenluftzustand, Sollwerte des Raumluftzustandes, und durch spezifische Bewertungsfaktoren, wie wirtschaftliche, finanzielle und/oder ökologische Betriebsgrößen der Klimaanlage, bestimmt sind, und eine Optimierung der Zielfunktion vorgenommen wird.

Ziel einer Klimaanlage ist die Einhaltung von vorgegebenen Luftzuständen bezüglich Temperatur und Feuchte der Raumluft in den zu klimatisierenden Räumen. Diese Vorgaben sind in einem Toleranzfeld nach DIN EN 15251 (früher DIN 1946) vorgegeben und entsprechen der thermischen Behaglichkeit der in diesen Räumen befindlichen Personen. Aufgabe der Steuerung und Regelung einer Klimaanlage ist es, den Raumluftzustand in diesem Behaglichkeitsgebiet zu stabilisieren, obwohl wechselnde innere und äußere Wärme- und/oder Feuchtelasten auf den Raum wirken. Innere Wärmelasten sind Abwärme von Menschen, Maschinen und Anlagen bzw. Wärmeverluste. Innere Feuchtelasten ergeben sich durch Feuchtigkeitsabgabe von Personen, Pflanzen und Anlagen bzw. bei Feuchteverlust durch hygroskopische Materialien im Raum. Die äußeren Lasten sind durch das sich wechselnde Umgebungsklima, vor allem durch Außenlufttemperatur und Außenluftfeuchte gekennzeichnet, gegeben. Eine Automatisierungsanlage erfüllt diese Aufgabe dadurch, dass die Leistung der einzelnen Luftbehandlungsaggregate selbsttätig an die sich ändernden inneren und äußeren Lasten, die sogenannten Störgrößen, angepasst wird. Da es hierzu vielfältige Möglichkeiten gibt, sind Verfahren zu entwickeln, die diese Steuerungsaufgabe mit minimalem Aufwand realisieren. Dieser Aufwand wird dann durch eine Zielfunktion bewertet, deren wesentliche Parameter ökonomische und/oder ökologische Parameter (Energieverbrauch, Energiekosten, Betriebskosten, $CO_2$-Ausstoss und andere) sind.

In der EP 0 786 712 A2 werden zwei getrennte Verfahren beschrieben, die zum einem die Raumluftsollwerte ermitteln, und zum anderen praktikable Regelungsverfahren für die Leistungsanpassung der Luftbehandlungsaggregate vorschlagen.

Das dort beschriebene Verfahren zur Ermittlung der Raumluftsollwerte beruht grundsätzlich auf der Ansteuerung der Grenzen des Toleranzfeldes. Das Verfahren wurde nur heuristisch gewonnen, nicht als Ergebnis der Optimierung einer veränderbaren Zielfunktion. Somit können auch veränderliche Bewertungen, wie spezifische Betriebskosten der einzelnen Luftbehandlungsaggregate, nicht berücksichtigt werden.

Ausgangsinformationen für das Verfahren sind die Istwerte der Raumluftzustände tR und xR sowie der Außenluftzustände AU (tAU, xAU). Diese Messungen bilden zwei Punkte in einem t-x-Diagramm, deren Verbindung durch einen Geradenabschnitt die möglichen Zustandsänderungen für die Mischkammer bzw. den Wärmerückgewinner kennzeichnet. Die Ausgänge von konventionellen Reglern für die Zulufttemperatur und Zuluftfeuchte werden benutzt, um den Temperatur- und Feuchtebedarf abzuleiten. Aus diesen Informationen und der Anlagenkonfiguration werden zwei Richtungsvektoren ermittelt, die nach einer Multiplikation mit Bewertungsfaktoren im t-x-Diagramm mit dem Zuluftsollwert als Koordinatenursprung eingetragen werden. Diese Bewertungsfaktoren können die spezifischen Kosten der einzelnen Luftbehandlungsaggregate berücksichtigen. Das Verfahren beruht nun im Wesentlichen darauf, dass der Zuluftsollwert und die bewerteten Bedarfsvektoren auf die Gerade der Wärmerückgewinnung projiziert und dort vektoriell addiert werden. Ergebnis ist ein Punkt auf der Geraden der Wärmerückgewinnung, dessen Normierung auf die Länge des Geradenabschnittes zu einem Steuersignal für die Wärmerückgewinnung führt. Dieses Signal wird zur direkten Ansteuerung des Wärmerückgewinners genutzt. Jeweils eine Kaskadenregelung für das Raumlufttemperatur- und -feuchteaggregat steuert die übrigen Aggregate an, wobei die vorgegebenen Raumluftsollwerte eingehalten werden. Dem Verfahren liegt die Annahme zugrunde, dass die Ausgangssignale der Regler für Zulufttemperatur und -feuchte, die den Temperatur- und Feuchtebedarf repräsentieren, gewichtet mit den spezifischen Kosten, ein Maß für die Kostenströme der einzelnen Aggregate sind. Um dem annähernd zu entsprechen, ist es zwingend notwendig, dass die Folgeregler in den beiden Kaskadenregelungen einen integralen Anteil haben. Wenn auch der Führungsregler zur Vermeidung bleibender Regelabweichungen einen I-Anteil erhält, wird die Stabilitätsreserve der Kaskade eingeschränkt. Somit muss der Folgeregler noch einen D-Anteil bekommen. Dies führt jedoch zu unerwünschten Verstärkungen hochfrequenter Störsignale. Außerdem sind die Reglerausgänge von den Reglerparametem und den Stellbereichen der Aggregate abhängig. Insbesondere die unterschiedlichen Stellbereiche der Aggregate zwingen zu einer Normierung der Regelvektoren, die im Einzelnen problematisch sein kann. Es lässt sich kein exakter Bezug zu den wirklichen Betriebskosten herleiten, und es gelingt auch keine Fehlerabschätzung dieser Näherung.

In der europäischen Patentanmeldung EP 1 209 547 A2 wird vorgeschlagen, das Problem der optimalen Steuerung einer Klimaanlage mit einer Mischkammer in zwei Teilschritten zu lösen, nämlich zunächst die optimalen Raumluftsollwerte zu bestimmen und dann die Luftbehandlungsaggregate entsprechend anzusteuern. Dazu werden geeignete Startwerte für die Steuerung der Wärmerückgewinnung durch die Mischkammer in Abhängigkeit von der Raumlast und dem Außenluftzustand vorgegeben, die durch Tests gewonnen wurden. Dass diese das Optimum darstellen, kann nicht bewiesen werden. Aus den Startwerten wird ein Mischpunkt für die Mischkammer bestimmt. Für den zweiten Teilschritt werden ausgehend von den Startwerten die notwendigen Enthalpien der Luftbehandlungsaggregate für einen optimalen Zuluftsollwert errechnet. Es wird eine eindimensionale Lösung des Optimierungsproblems vorgenommen. Als Optimierungsverfahren beider Teilschritte wird das sehr einfache Verfahren des goldenen Schnitts angewendet. In Klimaanlagen mit der Kombination einer Mischkammer und Wärmerückgewinner ist das Verfahren nicht anwendbar.

Der Erfindung liegt nun die Aufgabe zugrunde, die vorstehend genannten Nachteile zu beseitigen und ein Verfahren zu schaffen, welches eine Optimierung der Steuerung und Regelung von Raumlufttemperatur und Raumluftfeuchte mit Hilfe einer Klimaanlage - insbesondere Vollklimaanlage - ohne eine getrennte Bestimmung von Raumluftsollwerten und optimaler Ansteuerung von Mischklammer und/oder Wärmerückgewinner gewährleistet, und welches weiterhin auch auf einer herkömmlichen speicherprogrammierbaren Steuerung ausführbar ist.

Ausgehend von einem Verfahren der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Das Verfahren zur Steuerung einer Lufttemperatur und einer Luftfeuchte in Räumen mittels einer Klimaanlage geht davon aus, dass die Klimaanlage eine elektronische Steuerung besitzt und als Luftbehandlungsaggregate mindestens einen Wärmerückgewinner und/oder eine Mischkammer enthält. Je nach Anforderung sind auch optional ein Luftkühler, ein Lufterhitzer und/oder ein Luftbefeuchter in der Klimaanlage vorhanden.

Die Steuerung der Klimaanlage gibt Steuersignale für die Luftbehandlungsaggregate aus, durch die mittels des erfindungsgemäßen Verfahrens, unter Berücksichtigung eines in einem h-x-Diagramm definierten Behaglichkeitsgebietes, Raumluftsollwerte erreicht werden.

Zur Durchführung des Verfahrens wird eine Zielfunktion zugrunde gelegt, deren Parameter durch

- spezifische, von den Steuersignalen abhängige Enthalpien der Luftbehandlungsaggregate,
- den Außenluftzustand,
- Sollwerte des Raumluftzutandes
- und durch spezifische Bewertungsfaktoren, wie wirtschaftliche, finanzielle und/oder ökologische Betriebsgrößen der Klimaanlage,

bestimmt sind, und eine Optimierung der Zielfunktion vorgenommen wird.

Dabei ist das Verfahren dadurch gekennzeichnet, dass

- die Zielfunktion eine Summenfunktion der mit den Bewertungsfaktoren multiplizierten, von den Steuersignalen abhängigen spezifischen Enthalpien ist
- und, ausgehend von Werten der Wärmelast und der Feuchtelast des Raumes, ein Raumluftsollwert, der durch seine Temperatur und Feuchte bestimmt ist, auf den Grenzen, oder innerhalb des Behaglichkeitsgebietes so ermittelt wird dass die Zielfunktion ein Optimum ein Optimum annimmt,
- und die Steuersignale für den Wärmerückgewinner und/oder die Mischkammer so eingestellt werden, dass die Zielfunktion ein Optimum annimmt.

Als Optimierungsverfahren kommt ein gradientenfreies, mehrdimensionales, nichtlineares Verfahren zur Anwendung. Im Optimierungsverfahren werden die Beschränkungen der Steuergrößen der Mischkammer bzw. des Wärmerückgewinners, aber auch die Grenzen für den Raumluftzustand berücksichtigt. Dazu können die in der DIN EN 15251 für die verschiedenen Gebäude- bzw. Raumtypen abgelegten Parametersätze für die Kategorien I bis III berücksichtigt werden.

Als Ergebnis werden Sollwerte für den Raumluftzustand und die optimalen Ansteuersignale der Mischkammer oder/und eines Wärmerückgewinners erhalten. Im Gegensatz zu allen bisher bekannten Verfahren wird dieses Problem ohne eine vorherige Bestimmung von Raumluftsollwerten optimal gelöst. In einem Verfahrensschritt wird ebenfalls ermittelt, ob der Zielzustand der Luftbehandlung ohne jeglichen Energieaufwand allein mit der Umluftbeimischung oder/und Wärmerückgewinnung erreicht werden kann. In diesem Fall werden alle anderen Luftbehandlungsaggregate gesperrt, um unnötige Stellhandlungen zu umgehen.

Das Verfahren ist anwendbar auf Klimaanlagen mit allen denkbaren Aggregaten:

- Lufterhitzer
- Luftkühler
- Dampfbefeuchter

- Luftwäscher
- Mischkammer
- alle Arten der Wärmerückgewinner
- Kombinationen von Mischkammer und Wärmerückgewinner
- stufige Ventilatoren
- drehzahlgeregelte Ventilatoren

Diese Vielfalt der Aggregatreihungen, insbesondere die Kombinationen von Mischkammer und Wärmerückgewinnern unterscheidet das Verfahren von allen bisher bekannten Ausführungen.

Auch bei der Anwendung des Verfahrens auf die unterschiedlichsten Automationsstrukturen gibt es keine Beschränkungen. Unter anderem sind folgende Automationsstrukturen möglich:

- Temperatur- und Feuchtekaskade
- Zulufttemperatur- und Zuluftfeuchte-Regelung
- Temperaturkaskade (ohne Feuchteregelung)
- Zulufttemperatur-Regelung
- konstanter Volumenstrom
- variable Volumenstromregelung

Die Automationsstruktur "Temperaturkaskade und Feuchtebandkaskaden" wird oft eingesetzt, um gegenüber der Regelung mit einem festen Feuchtesollwert Energie einzusparen. Die gleichen Ergebnisse werden mit dem vorgeschlagenen Verfahren bei einer Temperatur- und Feuchtekaskade erreicht. Damit ist die Strategie "Feuchteband" nicht mehr nötig.

Auch in der Vielfalt der möglichen Automationsstrukturen unterscheidet sich das Verfahren von allen bisher bekannten Ausführungen.

Insgesamt ist ein Verfahren entstanden, das das Problem der optimalen Ansteuerung der Aggregate einer raumlufttechnischen Anlage ohne jegliche Einschränkungen und vollständig löst. Trotzdem ist es so gestaltet, dass alle notwendigen Informationen ohne zusätzlichen Aufwand erhalten werden können und das Verfahren auf einer für die Gebäudeautomation typischen Automationsstation implementierbar ist.

Sofern in der Klimaanlage eine Mischkammer vorhanden ist, wird zur Optimierung der Zielfunktion ein Mischpunkt in dem h-x-Diagramm auf der Geraden zwischen den Werten der Außenluft und den Werten des Raumluftsollwertes angenommen, von dem aus die Bedarfswerte für die Temperatur- und/oder Feuchtebehandlung als vektorielle Differenz zwischen dem Mischpunkt und dem durch die Raumlast und den Werten der Raumluft bestimmten Zuluftsollwert gebildet werden.

Die Bedarfsvektoren für die Bedarfswerte werden an den Mischpunkt im h-x-Diagramm angelegt und die spezifischen Enthalpien für die Endpunkte dieser Bedarfsvektoren berechnet. Diese werden mit den spezifischen Bewertungsfaktoren, die die Anpassung an die jeweilige Zielfunktion realisieren, multipliziert

und es wird ein Wert der Zielfunktion für den angestrebten Raumluftsollwert berechnet. Dabei werden die Steuersignale sowie die Sollwerte der Raumluft so lange verändert, bis die Zielfunktion ein Optimum annimmt.

Sofern in der Klimaanlage ein Wärmerückgewinner vorhanden ist, wird zur Optimierung der Zielfunktion ein Ausgangszustand des Wärmerückgewinners in dem h-x-Diagramm bestimmt, von dem aus die Bedarfswerte für die Temperatur- und/oder Feuchtebehandlung als vektorielle Differenz zwischen dem aktuellen Zustand des Wärmerückgewinners und dem durch die Raumlast und den Werten der Raumluft bestimmten Zuluftsollwert gebildet werden.

Die Bedarfsvektoren für die Bedarfswerte werden anhand des aktuellen Zustands des Wärmerückgewinners im h-x-Diagramm angelegt und die spezifischen Enthalpien für die Endpunkte dieser Bedarfsvektoren berechnet.

Diese werden mit den spezifischen Bewertungsfaktoren, die die Anpassung an die jeweilige Zielfunktion realisieren, multipliziert und ein Wert der Zielfunktion für den angestrebten Raumluftsollwert berechnet.

Dabei werden die Steuersignale sowie die Sollwerte der Raumluft so lange verändert werden, bis die Zielfunktion ein Optimum annimmt.

Sofern in der Klimaanlage ein Wärmerückgewinner und einer Mischkammer vorhanden sind, werden diese in Reihe geschaltet sind und das Verfahren auf beide Luftbehandlungsaggregate angewendet.

Das Verfahren wird anhand der Figuren näher erläutert. Dabei zeigen:

Fig. 1 ein Blockschaltbild einer Klimaanlage;;
Fig. 2 ein h-x-Diagramm mit dem Behaglichkeitsgebiet;
Fig. 3 ein h-x-Diagramm mit den Optimierungsvariablen im Fall der Mischkammer;
Fig. 4 eine Darstellung der Zielfunktionswerte bei Umluftbeimischung beim Kühlen;
Fig. 5 eine Darstellung der Zielfunktionswerte bei Umluftbeimischung beim Heizen;

Fig. 6 ein h-x-Diagramm mit den Optimierungsvariablen im Fall des Wärmerückgewinners;
Fig. 7 eine Steuerungsstruktur der Klimaanlage.

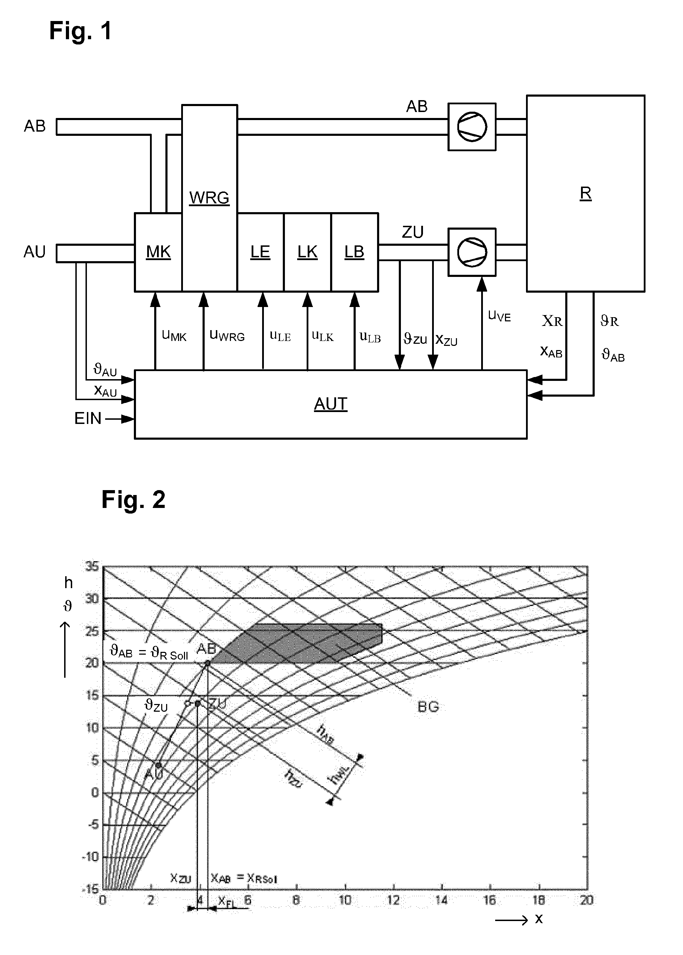

In Fig. 1 ist ein Blockschaltbild einer Klimaanlage für einen Raum R dargestellt, die aus der Außenluft AU eine Zuluft ZU generiert, die in den Raum R über einen Ventilator eingeleitet wird. Über einen weiteren Ventilator gelangt die Abluft AB des Raumes R in die Umgebung.

Die Klimaanlage besitzt eine Mischkammer MK und/oder einen Wärmerückgewinner WRG, über die Wärme und/oder Feuchte der Abluft AB entnommen und der Zuluft zugeführt wird. Neben den genannten Luftbehandlungsaggregaten sind optional ein Lufterhitzer LE, Ein Luftkühler LK und/oder ein Luftbefeuchter LB in der Klimaanlage vorhanden.

Die Klimaanlage wird von dem Automatisierungsrechner AUT gesteuert, der für die Luftbehandlungsaggregate die Steuersignale $u_{MK}$, $u_{WRG}$, $u_{LE}$, $u_{LK}$, $u_{LB}$, ausgehend von der optimierten Zielfunktion, ausgibt. Auch für die Ventilatoren wird ein Steuersignal $u_{VE}$ ausgegeben.

Zur Berechnung der Steuersignale $u_{ij}$ werden dem Automatisierungsrechner AUT über Sensoren die Werte für die Außenlufttemperatur $\vartheta_{AU}$, die Außenluftfeuchte $x_{AU}$, die Zulufttemperatur $\vartheta_{ZU}$, die Zuluftfeuchte $x_{ZU}$, die Raumtemperatur $\vartheta_R$ und die Raumfeuchte $x_R$ bereit gestellt. Eingabesignale EIN geben dem Automatisierungsrechner AUT Informationen über die Anlagenkonfiguration, Grenzen der Luftbehandlungsaggregate, Automationsstruktur, Grenzen des erlaubten Raumluftzustandes, Startbedingungen sowie Kostenfaktoren.

Zur Berechnung des Betriebs der Klimaanlage wird eine Zielfunktion F zugrunde gelegt, die abhängig ist von den Störgrößen, den Steuergrößen aber auch von den Sollwerten der Raumluftzustände für die Temperatur und Feuchte. Durch Änderungen der Parameter der Zielfunktion kann diese an die jeweilige Anforderung angepasst werden und somit wirtschaftliche (Energieverbrauch), oder ökologische Belange ($CO_2$-Ausstoß) berücksichtigen und bewerten. Eine Optimierung der Zielfunktion führt zu einem optimierten Betrieb der Klimaanlage.

Ohne Einschränkung der Allgemeingültigkeit soll angenommen werden, dass die bestmögliche Realisierung dann erreicht wird, wenn die Zielfunktion ein Minimum annimmt. Die Zielfunktion ist abhängig von den Störgrößen, den Steuergrößen aber auch von den Sollwerten für die Raumluftzustände; der durch seine Temperatur und Feuchte bestimmt ist.

Innere Wärmelasten WL eines Raumes sind Abwärme von Menschen, Maschinen und Anlagen bzw. Wärmeverluste. Innere Feuchtelasten FL ergeben sich bei Ausdünstung der Feuchtigkeit von Menschen und Pflanzen, der Feuchtigkeitsabgabe von Anlagen bzw. bei Feuchteverlust durch hygroskopische Materialien im Raum. Die äußeren Lasten sind durch das sich wechselnde Umgebungsklima, vor allem durch Außenlufttemperatur $\vartheta_{AU}$ und die relative Feuchte bzw. den Feuchtegehalt $x_{AU}$ der Außenluft gekennzeichnet, gegeben.

In allgemeiner Form lautet die Zielfunktion:

$$F = f\left(\vartheta_{AU}, x_{AU}, WL, FL, \vartheta_{RSoll}, x_{RSoll}, u_{MK}, u_{WRG}, u_{LE}, u_{LK}, u_{LB}, u_{VE}\right) \qquad \text{(Gl. 1.1)}$$

Die Störgrößen $\vartheta_{AU}$, $x_{AU}$, WL, FL sind nicht beeinflussbar, wohl aber die Steuergrößen $u_{MK}$, $u_{WRG}$, $u_{LE}$, $u_{LK}$, $u_{LB}$, $u_{VE}$ und, da ein Gebiet für die Raumluftsollwerte vorgegeben ist, auch die Raumluftsollwerte $\vartheta_{RSoll}$ und $x_{RSoll}$.

Ein Beispiel für eine konkrete Ausprägung der Zielfunktion ist die Verwendung der Energieverbrauchskosten. Dies soll hier ausgeführt werden, wobei andere Ausprägungen der Zielfunktion genauso verwendbar sind. Ausgangspunkt ist die Formulierung der Zielfunktion nach Gl. (1.1) Es sollen nun die Kostenströme K (in €/h) abgebildet werden, die mit den jeweiligen Luftzuständen und Ansteuerungen der Luftbehandlungselemente verbunden sind, wobei die Mischkammer und die Wärmerückgewinnung keinen Energieverbrauch erzeugen:

$$F = f\left(\vartheta_{AU}, x_{AU}, WL, FL, \vartheta_{RSoll}, x_{RSoll}, u_{MK}, u_{WRG}, u_{LE}, u_{LK}, u_{LB}, u_{VE}\right) = \dot{K}$$

$$\dot{K} = k_{LE} \cdot \dot{H}_{LE} + k_{LK} \cdot \dot{H}_{LK} + k_{LB} \cdot \dot{H}_{LB} + k_{VE} \cdot P_{VE} \qquad \text{(Gl. 1.2)}$$

Dabei sind:

$k_{LE} =$ spezifische Betriebskosten des Lufterhitzers in €/kWh,

$k_{LK} =$ spezifische Betriebskosten des Luftkühlers in €/kWh,

$k_{LB} =$ spezifische Betriebskosten des Luftbefeuchters (Dampfbefeuchter oder Luftwäscher) in €/kWh,

$k_{VE} =$ spezifische Betriebskosten der Ventilatoren in €/kWh.

$\dot{H}_{LE} =$ Enthalpiestrom in kW, der vom Lufterhitzer an den Luftstrom übertragen wird,

$\dot{H}_{LK}$ = Enthalpiestrom in kW, der vom Luftkühler dem Luftstrom entzogen wird,

$\dot{H}_{LB}$ = Enthalpiestrom in kW, der vom Luftbefeuchter an den Luftstrom übertragen wird,

$P_{VE}$ = elektrische Leistung in kW der Ventilatoren zur Erzeugung des jeweiligen Luftstroms.

Es ist bekannt, dass bei variablem Volumenstrom der Energieaufwand der Ventilatoren mit der dritten Potenz des Luftmassenstroms verbunden ist. Die Ansteuerung der Ventilatoren muss deshalb in jeder Situation mit dem jeweils zulässigen minimalen Luftmassenstrom erfolgen. Somit kann die Ansteuerung der Ventilatoren vom Optimalsteuerproblem separiert werden. Eine geeignete Regelung kann diese Ansteuerung übernehmen. Der letzte Term kann aus der Zielfunktion entfernt werden.

$$F = f\left(\vartheta_{AU}, x_{AU}, WL, FL, \vartheta_{RSoll}, x_{RSoll}, u_{MK}, u_{WRG}, u_{LE}, u_{LK}, u_{LB}\right) = \dot{K} \qquad \text{(Gl. 1.3)}$$

$$\dot{K} = k_{LE} \cdot \dot{H}_{LE} + k_{LK} \cdot \dot{H}_{LK} + k_{LB} \cdot \dot{H}_{LB}$$

Die Enthalpieströme können in Abhängigkeit der Steuergrößen formuliert werden:

$$\dot{H}_{LE} = h_{LE}\left(u_{LE}\right) \cdot \dot{m}_{L}$$

$$\dot{H}_{LK} = h_{LK}\left(u_{LK}\right) \cdot \dot{m}_{L} \qquad \text{(Gl. 1.4)}$$

$$\dot{H}_{LB} = h_{LB}\left(u_{LB}\right) \cdot \dot{m}_{L}$$

Dabei sind:

$h_{LE}(u_{LE})$ = auf den Luftmassenstrom $\dot{m}_L$ bezogene spezifische Enthalpie, die der Lufterhitzer in Abhängigkeit von der aktuellen Steuergröße $u_{LE}$ überträgt,

$h_{LK}(u_{LK})$ = auf den Luftmassenstrom $\dot{m}_L$ bezogene spezifische Enthalpie, die der Luftkühler in Abhängigkeit von der aktuellen Steuergröße $u_{LK}$ überträgt,

$h_{LB}(u_{LB})$ = auf den Luftmassenstrom $\dot{m}_L$ bezogene spezifische Enthalpie, die der Luftbefeuchter in Abhängigkeit von der aktuellen Steuergröße $u_{LB}$ überträgt,

$\dot{m}_L$ = Luftmassenstrom,

Da der Luftmassenstrom in jeden Term der Zielfunktion auftritt, kann die gesamte Funktion durch den Luftmassenstrom geteilt werden:

$$F = f\left(\vartheta_{AU}, x_{AU}, WL, FL, \vartheta_{RSoll}, x_{RSoll}, u_{MK}, u_{WRG}, u_{LE}, u_{LK}, u_{LB}\right) = \dot{K}\big/\dot{m}_L = \dot{k} \qquad \text{(Gl. 1.5)}$$

$$k_{LE} \cdot h_{LE}\left(u_{LE}\right) + k_{LK} \cdot h_{LK}\left(u_{LK}\right) + k_{LB} \cdot h_{LB}\left(u_{LB}\right)$$

Diese Zielfunktion bildet jetzt den Kostenstrom bezogen auf den Luftmassenstrom ab:

$$\dot{K}\big/\dot{m}_L = \dot{k} \quad \text{in} \quad \frac{\frac{€}{h}}{\frac{kg}{h}}$$

Die Zielfunktion ist jetzt nur noch von spezifischen Größen abhängig-

Die Umluftbeimischung durch die Mischkammer MK und die Wärmerückgewinnung durch einen Wärmerückgewinner WRG sind nicht durch einfache Entscheidung einem Regler zuzuordnen, wohl aber die Ansteuerung des Lufterhitzers LE, des Luftkühlers LK, des Luftbefeuchters LB sowie der Ventilatoren. Die Steuergrößen $u_{LE}$, $u_{LK}$, $u_{LB}$ und $u_{VE}$ werden durch geeignete Regler angesteuert.

Das Optimierungsproblem lautet nun:

Bestimme den Raumluftzustand $\vartheta_{RSoll}$ und $x_{RSoll}$ sowie die Steuergrößen der Luftbehandlungselemente $u_{MK}$, $u_{WRG}$ so, dass die Zielfunktion (G1. 1.6) ein Minimum annimmt:

$$\min_{\vartheta_{RSoll},x_{RSoll},u_{MK},u_{WRG}}\{F\} \qquad\qquad \text{(Gl. 1.6)}$$

$$F = k_{LE}\cdot h_{LE}\left(u_{LE}\right)+k_{LK}\cdot h_{LK}\left(u_{LK}\right)+k_{LB}\cdot h_{LB}\left(u_{LB}\right)$$

Zur vollständigen Beschreibung des Optimalsteuerungsproblems gehören noch die Nebenbedingungen in Gleichungs- und Ungleichungsform.

Die Grenzen des Behaglichkeitsgebietes sind durch ein Toleranzfeld nach DIN EN 15251 (früher DIN 1946) gegeben und können im Verfahren variiert werden. Sehr oft werden noch die Grenzen des Behaglichkeitsgebietes nach DIN 1946 verwendet. Diese sind

$$20° \leq \vartheta_{R\,Soll} \leq 26°,$$

$$30\% \leq \varphi_{R\,Soll} \leq 65\%$$

und

$$x_{R\,Soll} \leq 11.5 \ \text{g/kg}$$

Hierzu gehören die Einhaltung der Behaglichkeitsbedingungen für die Raumluft nach DIN EN 15251 (früher DIN 1946):

$$\begin{aligned}\vartheta_{RSoll\,\min} &\leq \vartheta_{RSoll} \leq \vartheta_{RSoll\,\max}\\ \varphi_{RSoll\,\min} &\leq \varphi_{RSoll} \leq \varphi_{RSoll\,\max} \qquad\qquad \text{(Gl. 1.7)}\\ x_{RSoll} &\leq x_{RSoll\,\max}\end{aligned}$$

und die Beschränkungen der Steuergrößen:

$$\begin{aligned}u_{MK\,\min} &\leq u_{MK} \leq u_{MK\,\max}\\ u_{WRG\,\min} &\leq u_{WRG} \leq u_{WRG\,\max} \qquad\qquad \text{(Gl. 1.8)}\end{aligned}$$

Das hier formulierte Optimalsteuerproblem ist auf für die Gebäudeautomation üblichen Automationsrechnern lösbar. Dazu ist eine kompakte und rechenzeitgünstige Darstellung notwendig. Insbesondere kann auf aufwändige Modelle für das Prozessverhalten verzichtet werden. Dies gelingt im Verfahren durch eine einfache Berechnung der Zielfunktionswerte.

Die Berechnung der Zielfunktionswerte wird grafisch in einem h-x-Diagramm gemäß Fig. 2 erläutert werden. Wichtig für die Ermittlung der optimalen Raumluftsollwerte $\vartheta_{RSoll}$ und $x_{RSoll}$ ist das in Fig. 2 gekennzeichnete Behaglichkeitsgebiet BG. Innerhalb bzw. auf den Grenzen dieses Gebietes müssen die Raumluftzustände liegen.

Bei richtiger Arbeitsweise der Steuerung liegt der Abluftzustand AB genau auf den Raumluftsollwerten $\vartheta_{RSoll}$ und $x_{RSoll}$. Durch die Luftbehandlungsoperationen muss die Luft bei Lufteintritt mit dem Außenluftzustand AU am Ende des Klimakanals auf den Zuluftzustand ZU gebracht werden. Der Zuluftzustand unterscheidet sich vom Abluftzustand durch die innere Wärmelast WL und innere Feuchtelast FL (Gl. 1.9):

$$h_{ZU} = h_{AB} - h_{WL}$$
$$x_{ZU} = x_{AB} - x_{FL} \qquad\qquad (\text{Gl. } 1.9)$$
$$\vartheta_{ZU} = f(h_{ZU}, x_{ZU})$$

Dabei sind:

$h_{ZU}$   spezifische Enthalpie der Zuluft in kJ/kg,
$h_{AB}$   spezifische Enthalpie der Abluft in kJ/kg,
$h_{WL}$   Wärmelast in kJ/kg,
$x_{ZU}$   Feuchtegehalt der Zuluft in g/kg.
$x_{AB}$   Feuchtegehalt der Abluft in g/kg,
$x_{FL}$   Feuchtelast in g/kg,
$\vartheta_{ZU}$   Zulufttemperatur in °C.

Das Verfahren gestattet die Behandlung positiver und negativer Wärmelasten, die zum Kühlen bzw. zum Heizen führen. Außerdem werden positive und negative Feuchtelasten (Entfeuchten bzw. Befeuchten) unterschieden.

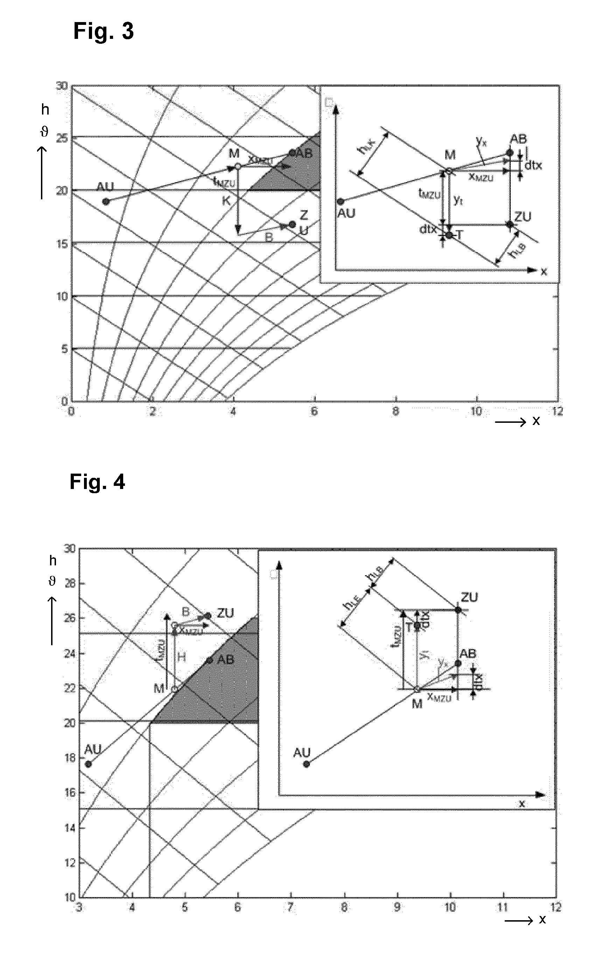

Wie beispielhaft in Fig. 3 ersichtlich ist, müssen die Operationen Mischen, Kühlen und Befeuchten ausgeführt werden. Es wird deutlich, dass sowohl die Lage des Abluftzustandes AB (= Raumluftsollwerte) als auch die Lage des Mischpunktes M (und damit die Ansteuerung der Mischkammer MK) einen wesentlichen Einfluss auf den Kühl- und Befeuchtungsaufwand haben.

Die beiden übrigen Operationen Kühlen und Befeuchten sind eindeutig einem Aggregat LK, LB zuzuordnen, so dass die Ansteuerung dieser Aggregate über jeweils einen Regler erfolgen kann, der als Sollwert den jeweiligen Sollwert für den Zuluftzustand bekommt. Dies gilt analog für den Fall einer negativen Wärmelast (Raumheizung), wobei hier die Lufterwärmung eindeutig dem Lufterhitzer LE und die Entfeuchtung dem Luftkühler LK zugeordnet werden können, die über jeweils einen eigenen Regler angesteuert werden.

Ähnliche Aussagen ergeben sich bei Wärmerückgewinnern WRG. Je nach Art des Wärmerückgewinners WRG (mit oder ohne Feuchteübertragung) werden durch seine Ansteuerung entweder Temperatur und Feuchte, oder nur die Temperatur des Wärmerückgewinnerausgangs beeinflusst. Auch die Ansteuerung der Wärmerückgewinner WRG wird im Verfahren durch die Optimalsteuerung gelöst. Das Verfahren ist auch in der Lage, die Kombination von Mischkammer MK und Wärmerückgewinner WRG zu behandeln. Aus Gründen einer deutlicheren Darstellung wird in den folgenden Ausführungen davon ausgegangen, dass nur eines dieser Aggregate vorhanden ist.

Der Wert der Zielfunktion F kann geometrisch interpretiert und anhand von Fig. 3 erläutert werden. Je nach Lage des Luftzustandes am Ausgang der Mischkammer MK oder des Wärmerückgewinners WRG sind immer nur zwei Anteile der Zielfunktion aktiv. In Fig. 3 sind dies die Bedarfe für Kühlen K und Befeuchten B.

Für diesen Fall nimmt die Zielfunktion nach Gl. 1.6 folgende Gestalt an:

$$F = k_{LK} \cdot h_{LK}\left(u_{LK}\right) + k_{LB} \cdot h_{LB}\left(u_{LB}\right)$$

Die spezifischen Enthalpien $h_{LK}$ und $h_{LB}$ kann man im h-x-Diagramm gemäß Fig. 3 darstellen. Für einen bestimmten Abluftzustand AB ergibt sich mit der Ansteuerung der Mischkammer der Mischpunkt M, der den Luftzustand nach der Mischkammer MK kennzeichnet. Von diesem Punkt aus muss der bekannte Zuluftzustand ZU erreicht werden. Die beiden Größen $t_{MZU}$ und $x_{MZU}$ stellen die Temperatur- bzw. die Feuchtedifferenz zwischen diesen beiden Zuständen dar. Ausgehend von diesen beiden Vektoren werden die Bedarfsvektoren für die Temperaturbehandlung $y_t$ und die Feuchtebehandlung $y_x$ gebildet. Dies geschieht folgendermaßen:

Der Bedarfsvektor $y_x$ wird durch Multiplikation des Vektors $x_{MZU}$ mit dem Richtungsvektor für die Befeuchtung erhalten. Im Fall des Dampfbefeuchters ist der Anstieg dieses Bedarfsvektors im h-x-Diagramm gleich der spezifischen Enthalpie des Dampfes. Bei genauer Betrachtung enthält der Vektor $y_x$ einen Temperaturanteil dtx, dieser Wert muss zu dem Vektor $t_{MZU}$ hinzugefügt werden und ergibt somit den Bedarfsvektor $y_t$.

Im h-x-Diagramm werden diese Bedarfsvektoren an den Mischpunkt M angelegt und die spezifischen Enthalpien für den Mischpunkt M, den Endpunkt T des Temperaturbedarfsvektors $y_t$ sowie für den Zuluftsollwert ZU gebildet.

Die Differenz zwischen der spezifischen Enthalpie am Mischpunkt M und der am Endpunkt T des Temperaturbedarfs-vektors $y_t$ ist die spezifische Enthalpie für die Wärmebehandlung $h_{LK}$ Analog ist die Differenz zwischen der spezifischen Enthalpie am Endpunkt T des Temperaturbedarfsvektors und der spezifischen Enthalpie des Zuluftsollwertes gleich der spezifischen Enthalpie für das Befeuchten $h_{LB}$.

Diese spezifischen Enthalpien werden nun noch mit den Kostenfaktoren k multipliziert und ihre Absolutwerte addiert. Der resultierende Wert ergibt den exakten Wert der Zielfunktion F.

Der Fall Heizen wird mit den Bedarfen für das Heizen H und Befeuchten B analog in Fig. 4 dargestellt.

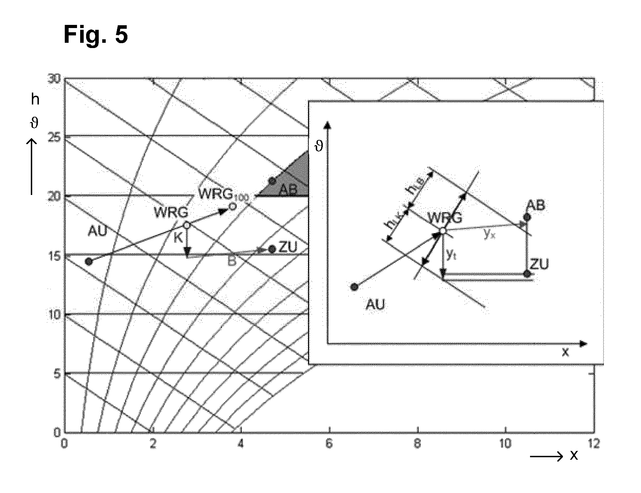

Anstelle der Mischkammer kann auch ein Wärmerückgewinner WRG eingesetzt werden Die sich dann ergebenden Beziehungen sind in Fig. 5 dargestellt.

Wenn der Abluftzustand AB mit dem Temperaturänderungsgrad bzw. dem Feuchteänderungsgrad bewertet wird, ergibt sich ein neuer maximal möglicher Ausgangszustand des Wärmerückgewinners $WRG_{100}$. Die Punkte AU und $WRG_{100}$ bilden nun einen Geradenabschnitt, der alle möglichen Zustandsänderungen durch den Wärmerückgewinner WRG beschreibt. Der WRG-Ausgang liegt auf diesem Geradenabschnitt und wird analog behandelt, wie der Mischpunkt M im Fall der Mischkammer.

Mit der Variation der Änderungsgrade ist Behandlung aller Arten der Wärmerückgewinnung möglich.

Anstelle des bisher betrachteten Dampfbefeuchters kann auch ein Luftwäscher berücksichtigt werden. Hier ändert sich lediglich der Vektor der Luftbehandlung und daraus resultierend ein anderer Temperaturanteil dtx durch die Befeuchtung.

Damit ist es gelungen, die Zielfunktionswerte auf einfache Weise zu bestimmen. Dies ist die Voraussetzung für eine Realisierung auf einem für die Gebäudeautomation typischen Automationsrechner.

Es wird ein Optimierungsverfahren benutzt, das keine Beschränkungen berücksichtigen kann. Deshalb müssen die Beschränkungen in Ungleichungsform (Gl. 1.7 und Gl. 1.8) in die Zielfunktion F eingearbeitet werden. Dazu wird ein zusätzlicher Strafterm definiert, der zu dem bisher beschriebenen Wert addiert wird.

$$\vartheta_{AB} < \vartheta_{RSoll\,min} : \quad F = F + \left(\vartheta_{AB} - \vartheta_{RSoll\,min}\right)^2 \cdot k$$

$$\vartheta_{AB} > \vartheta_{RSoll\,max} : \quad F = F + \left(\vartheta_{AB} - \vartheta_{RSoll\,max}\right)^2 \cdot k$$

$$\varphi_{AB} < \varphi_{RSoll\,min} : \quad F = F + \left(\varphi_{AB} - \varphi_{RSoll\,min}\right)^2 \cdot k$$

$$\varphi_{AB} > \varphi_{RSoll\,max} : \quad F = F + \left(\varphi_{AB} - \varphi_{RSoll\,max}\right)^2 \cdot k$$

$$x_{AB} > x_{RSoll\,max} : \quad F = F + \left(x_{AB} - x_{RSoll\,max}\right)^2 \cdot k \qquad \text{GL. 1.10}$$

$$u_{MK} < u_{MK\,min} : \quad F = F + \left(u_{MK} - u_{MK\,min}\right)^2 \cdot k$$

$$u_{MK} > u_{MK\,max} : \quad F = F + \left(u_{MK} - u_{MK\,max}\right)^2 \cdot k$$

$$u_{WRG} < u_{WRG\,min} : \quad F = F + \left(u_{WRG} - u_{WRG\,min}\right)^2 \cdot k$$

$$u_{WRG} > u_{WRG\,max} : \quad F = F + \left(u_{WRG} - u_{WRG\,max}\right)^2 \cdot k$$

k ist hier ein Faktor, der die Verletzung der Nebenbedingungen bewertet.

Diese Gleichungen gelten für den Fall, dass eine Regelung des Raumluftzustandes erfolgt.

Das Verfahren kann auch auf andere Automationsstrukturen angewendet werden. In Abhängigkeit vom Parameter "Automationsstruktur" müssen dann andere Beziehungen berücksichtigt werden. Zum Beispiel muss der Feuchtegehalt $x_M$ bzw. $x_{WRG}$ am Mischkammer- bzw. WRG-Ausgang einbezogen werden.

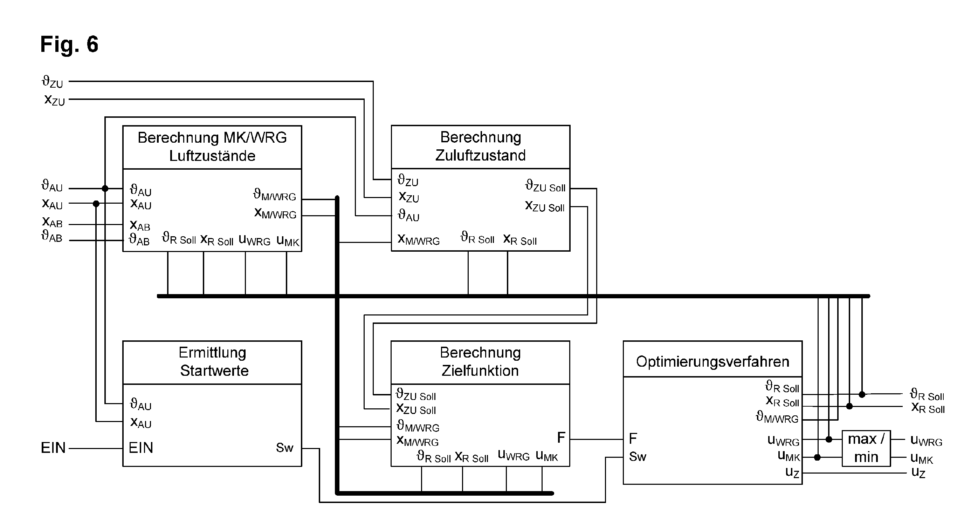

Fig. 6 stellt schematisch die Steuerungsstruktur in dem Automatisierungsrechner zur Durchführung des Verfahrens dar. Kern der Anordnung ist das Modul "Optimierungsverfahren". Dessen Ausgangsinformationen sind:

- Sollwert für die Raumtemperatur $\vartheta_{RSoll}$
- Sollwert für den Feuchtegehalt der Raumluft $x_{RSoll}$
- Steuersignal für die Ventilatoren $u_{VE}$
- Temperaturvorgabe für MK-/WRG-Ausgang $\vartheta_M$ bzw. $\vartheta_{WRG}$

- oberer/unterer Wert der Steuergröße für MK /WRGmax, min

Die oberen/unteren Werte der Steuergrößen werden durch eine Max-/Min-Auswahl aus den Steuergrößen $u_{WRG}$ und $u_{MK}$ gewonnen.

Ziel des Optimierungsverfahrens ist die Bestimmung der Steuergrößen $\vartheta_{R\,soll}$, $x_{R\,Soll}$, $u_{MK}$, $u_{WRG}$, die die Zielfunktion F minimieren. Dazu müssen zunächst Startwerte für die Steuergrößen vorgegeben werden, von denen aus die Minimierung beginnen soll. Erfahrungsgemäß hängt das Ergebnis einer Optimierung von diesen Startwerten ab. Bei ungünstiger Wahl liefert das Optimierungsverfahren nur ein lokales Minimum. Deshalb werden bei einem Neustart des Verfahrens die Startwerte in Abhängigkeit vom Außenluftzustand gewählt. Bei einer wiederholten Optimierung werden die zuletzt ermittelten Werte der Optimierungsvariablen als Startwerte verwendet. Dies sichert das Auffinden eines globalen Minimums.

Als Optimierungsverfahren ist prinzipiell jedes unbeschränktes, mehrdimensionales nichtlineares Verfahren geeignet. Vorzugsweise sollte es ein gradientenfreies Verfahren sein. Im Verfahren wird das Simplexverfahren nach Nelder und Mead verwendet.

Es gibt einen Bereich der Außentemperatur, in dem die Zielfunktion F den Wert Null annimmt (Nullenergiezone). Dies bedeutet, dass die raumlufttechnische Anlage ohne Aufwand betrieben werden kann. Die Steuergrößen $u_{MK}$, $u_{WRG}$ nehmen über weite Bereiche der Außenluft ihren minimalen, bzw. maximalen Wert an. Mit diesen Werten sollten der Wärmerückgewinner WRG bzw. die Mischkammer MK direkt angesteuert werden. In der Nullenergiezone werden Werte der Steuergrößen $u_{MK}$, $u_{WRG}$ zwischen den maximalen und minimalen Werten erhalten. Aufgrund der nichtlinearen Kennlinie des Wärmerückgewinners WRG (dies trifft genauso für die Mischkammer MK zu) werden diese Steuergrößen nicht direkt an den Wärmerückgewinner WRG bzw. die Mischkammer MK ausgegeben werden. Im Gegensatz zu den bisher bekannten Verfahren wird für diesen Fall der Wärmerückgewinner WRG (die Mischkammer MK) durch einen Regler angesteuert, der als Sollwert die berechnete Zulufttemperatur $\vartheta_{ZU}$ zugewiesen bekommt. Der Feuchteausgang des Wärmerückgewinners WRG ergibt sich hieraus automatisch.

Innerhalb der Nullenergiezone werden die übrigen Regler über das Steuersignal $u_Z$ für die Zuluft gesperrt, um unnötige Stellhandlungen zu unterbinden.

Die für die Optimierung wichtigen Startwerte werden im Modul "Ermittlung Startwerte" in Abhängigkeit vom Außenluftzustand $\vartheta_{AU}$, $x_{AU}$, gewählt.

Der Wert der Zielfunktion F, die im Modul "Optimierungsverfahren" minimiert wird, wird vom Modul "Berechnung Zielfunktion" übergeben. Dieser Wert wird in Abhängigkeit von den Optimierungsvariablen $\vartheta_{RSoll}$, $x_{RSoll}$, $u_{WRG}$, $u_{MK}$, dem Zuluftzustand $\vartheta_{ZU}$, $x_{ZU}$ und dem Luftzustand $\vartheta_M$, $x_M$ / $\vartheta_{WRG}$, $x_{WRG}$ berechnet.

Bei der Berechnung der Zielfunktion F werden unterschiedliche Kostenfaktoren k für die Luftbehandlungsprozesse (Heizen, Kühlen/Entfeuchten, Befeuchten) berücksichtigt. Außerdem werden die Beschränkungen durch die Grenzen des Raumluftzustandes und der Steuergrößen für die Mischkammer und/oder den Wärmerückgewinner behandelt. Diese Parameter werden, zusammen mit einem Parameter "Automationsstruktur" über die Eingabe EIN einmalig eingegeben und können an die jeweiligen Bedingungen angepasst werden.

Der Luftzustand am MK- bzw. WRG-Ausgang ($\vartheta_M$, $x_M$ / $\vartheta_{WRG}$, $x_{WRG}$). wird im Modul "Berechnung MK/WRG-Luftzustände" in Abhängigkeit des Außenluftzustandes $\vartheta_{AU}$, $x_{AU}$, den Raumluftsollwerten $\vartheta_{RSoll}$, $x_{RSoll}$, und den Steuergrößen für die MK/WRG $u_{WRG}$, $u_{MK}$ berechnet. Der Feuchtegehalt der Außenluft $x_{AU}$ wird aus den Messungen der Außenlufttemperatur $\vartheta_{AU}$ und der relativen Feuchte $\varphi_{AU}$ ermittelt.

Im Modul "Berechnung MK/WRG-Luftzustände" können die verschiedensten Anlagenkonfigurationen berücksichtigt werden. Nur für den Fall, dass keine Raumtemperatur- bzw. Raumfeuchteregelung erfolgt (ausgedrückt durch den Parameter "Automationsstruktur), werden die Raumluftsollwerte durch die gemessenen Abluftzustände ersetzt. Dazu erfolgt eine Messung der Ablufttemperatur $\vartheta_{AU}$ und der relativen Feuchte $\varphi_{AU}$ und eine Berechnung des Feuchtegehaltes $x_{AU}$.

Die Berechnung des Zuluftzustandes wird im Modul "Berechnung Zuluftzustand" vorgenommen. Die Eingangsinformationen, die den Zuluftzustand $\vartheta_{ZU}$, $x_{ZU}$ beschreiben, werden im Modul "Berechnung Zuluftzustand" aus dem Abluftsollwert und den Raumlasten nach Gl. 1.9 bestimmt. Nach Beendigung der Startphase werden die Werte $\vartheta_{ZU}$ und $x_{ZU}$ aus den Raumlasten berechnet Diese Raumlasten können aus der Differenz der Raumlustsollwerte und der Sollwerte der Zuluftregler gewonnen werden. Die dazu notwendigen Gleichungen sind:

$$\vartheta_{WL} = \vartheta_{R\,Soll} - \vartheta_{ZU\,Soll}$$

$$x_{FL} = x_{R\,Soll} - x_{ZU\,Soll} \qquad\qquad \text{Gl. 1.11}$$

$$h_{WL} = c_{pL} \cdot \vartheta_{WL} + x_{FL} \cdot \left( h_0 + c_{pD} \cdot \vartheta_{WL} \right)$$

Dabei sind:

$c_{PL}$      spezifische Wärmekapazität der Luft

$c_{PD}$      spezifische Wärmekapazität des Wasserdampfes

$h_0$      spezifische Verdampfungsenthalpie bei 0°C

In der Startphase des Verfahrens erfolgt eine außentemperaturabhängige Vorgabe der Raumlasten.

Anhand einer Beispielrechnung werden die Ergebnisse des Verfahrens erläutert.
Die Anlagenkonfiguration sieht eine Mischkammer, einen Lufterhitzer, einen Luftkühler, einen Dampfbefeuchter und Ventilatoren vor, die in einer Automationsstruktur als Temperatur- u. Feuchtekaskade betrieben werden.
Die Außentemperaturbewegt sich zwischen $-15°C \leq \vartheta AU \leq 35°C$.
Eine Feuchtelast ist nicht vorhanden.

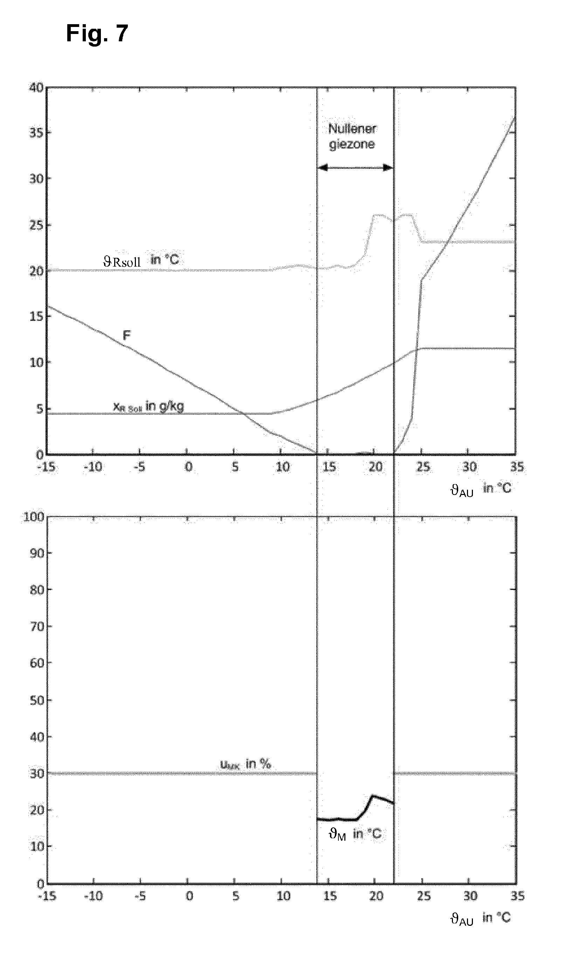

Die Ergebnisse sind im Fig. 7 dargestellt. Die Zielfunktion F zeigt eine deutliche Nullenergiezone. Innerhalb dieser Zone gibt das Verfahren die Temperatur $\vartheta_M$ als Sollwert für die Regler aus aus. Außerhalb dieser Zone wird die Mischkammer mit der minimalen Steuergröße von 30% angesteuert.

Bezugszeichen:

AB      Abluft

AU      Außenluft

AUT      Automatisierungsrechner

B      Bedarf an Befeuchtung

EIN      Eingabewerte

F      Zielfunktion

FL      Feuchtelast

H      Bedarf an Heizung

K      Bedarf an Kühlung

LB      Luftbefeuchter

LE      Lufterhitzer

LK      Luftkühler

R      Raum

$R_{Soll}$      Sollwert des Raumluftzustandes

VE      Ventilator

WL      Wärmelast

ZU      Zuluft

$h_{AB}$      spezifische Enthalpie der Abluft in kJ/kg,

$h_{LB}$      auf den Luftmassenstrom $\dot{m}_L$ bezogene spezifische Enthalpie des Luftbefeuchters

$h_{LE}$      auf den Luftmassenstrom $\dot{m}_L$ bezogene spezifische Enthalpie des Lufterhitzers

$h_{LK}$      auf den Luftmassenstrom $\dot{m}_L$ bezogene spezifische Enthalpie, des Luftkühlers

$h_{WL}$      Wärmelast in kJ/kg,

$h_{ZU}$      spezifische Enthalpie der Zuluft in kJ/kg,

$k$      Kostenfaktoren

$u_{ij}$      Steuersignale für die Luftbehandlungsaggregate

$u_{LB}$      Steuersignal für den Luftbefeuchter

$u_{LE}$      Steuersignal für den Lufterhitzer

$u_{LK}$      Steuersignal für den Luftkühler

$u_{MK}$      Steuersignal für die Mischkammer

$u_{VE}$      Steuersignal für die Ventilatoren

$u_{WRG}$      Steuersignal für den Wärmerückgewinner

$\vartheta_{AB}$      Ablufttemperatur

$\vartheta_{AU}$      Außenlufttemperatur

$\vartheta_{M,}$      Mischpunkttemperatur

$\vartheta_R$      Raumlufttemperatur

$\vartheta_{ZU}$      Zulufttemperatur

$x_{AB}$      Feuchtegehalt der Abluft in g/kg,

$x_{AU}$      Feuchtegehalt der Außenluft in g/kg,

$X_{FL}$     Feuchtelast in g/kg,

$x_M$     Mischpunktfeuchte

$x_R$     Feuchtegehalt der Raumluft in g/kg,

$x_{ZU}$     Feuchtegehalt der Zuluft in g/kg.

$y_t$     Bedarfsvektor für die Temperaturbehandlung

$y_x$     Bedarfsvektor für die Feuchtebehandlung

**Patentansprüche**

1. Verfahren zur Steuerung einer Lufttemperatur (t) und einer Luftfeuchte (x) in Räumen mittels einer Klimaanlage mit elektronischer Steuerung, die als Luftbehandlungsaggregate mindestens einen Wärmerückgewinner (WRG) und/oder eine Mischkammer (MK) enthält sowie auch optional einen Luftkühler (LK), einen Lufterhitzer (LE) und/ oder einen Luftbefeuchter (LB), durch die unter Berücksichtigung eines in einem h-x-Diagramm definierten Behaglichkeitsgebietes (BG) Steuersignale (uij) für die Luftbehandlungsaggregate (MK, WRG, LK, LE, LB) ausgegeben werden, wobei zur Durchführung des Verfahrens eine Zielfunktion (F) zugrunde gelegt wird, deren Parameter durch spezifische, von den Steuersignalen (uij) abhängige Enthalpien (hLK, hLE,hLB) der Luftbehandlungsaggregate, den Außenluftzustand (AU), Sollwerte des Raumluftzustandes (Rson), und durch spezifische Bewertungsfaktoren (k), wie wirtschaftliche, finanzielle und/oder ökologische Betriebsgrößen der Klimaanlage, bestimmt sind, und eine Optimierung der Zielfunktion (F) vorgenommen wird,
   wobei die Zielfunktion (F) eine Summenfunktion der mit den Bewertungsfaktoren (k) multiplizierten, von den Steuersignalen (uij) abhängigen spezifischen Enthalpien (hLK, hLE, hLB) ist,
   **dadurch gekennzeichnet, dass**

   - ausgehend von Werten der Wärmelast (hwL) und der Feuchtelast (XRL) des Raumes, ein Raumluftsollwert (RSoll), der durch seine Temperatur ($\vartheta$RSoll) und Feuchte (XR Soll) bestimmt ist, auf den Grenzen, oder innerhalb des Behaglichkeitsgebietes (BG) so ermittelt wird, dass die Zielfunktion (F) ein Optimum annimmt,
   - und die Steuersignale (uij) für den Wärmerückgewinner (WRG) und/oder die Mischkammer (MK) so eingestellt werden, dass die Zielfunktion (F) ein Optimum annimmt.

2. Verfahren nach Anspruch 1, **dadurch gekennzeichnet, dass** beim Vorhandensein einer Mischkammer (MK) zur Optimierung der Zielfunktion (F) ein Mischpunkt (M) in dem h-x-Diagramm auf der Geraden zwischen den Werten der Außenluft (AU) und den Werten des Raumluftsollwertes (Rson) angenommen wird, von dem aus die Bedarfswerte für die Temperatur- und/oder Feuchtebehandlung als vektorielle Differenz zwischen dem Mischpunkt (M) und dem durch die Raumlast (hwL, XRL) und den Werten der Raumluft ($\vartheta$RSoll, XR Soll) bestimmten Zuluftsollwert (ZU) gebildet werden, Bedarfsvektoren (yt, yx) für die Bedarfswerte an den Mischpunkt (M) im h-x-Diagramm angelegt werden,
   und die spezifischen Enthalpien ($h_{LK}$, $h_{LE}$, $h_{LB}$) für die Endpunkte dieser Bedarfsvektoren ($y_x$, $y_t$) berechnet, mit den spezifischen Bewertungsfaktoren (k), die die Anpassung an die jeweilige Zielfunktion (F) realisieren, multipliziert werden und ein Wert der Zielfunktion (F) für den angestrebten Raumluftsollwert ($R_{Soll}$) berechnet wird
   und die Steuersignale ($u_{ij}$) sowie die Sollwerte der Raumluft ($R_{Soll}$) so lange verändert werden, bis die Zielfunktion (F) ein Optimum annimmt.

3. Verfahren nach Anspruch 1, **dadurch gekennzeichnet, dass** beim Vorhandensein eines Wärmerückgewinners (WRG) zur Optimierung der Zielfunktion (F) ein Ausgangszustand des Wärmerückgewinners ($WRG_{100}$) in dem h-x-Diagramm bestimmt wird, von dem aus die Bedarfswerte für die Temperatur- und/oder Feuchtebehandlung als vektorielle Differenz zwischen dem aktuellen Zustand des Wärmerückgewinners (WRG) und dem durch die Raumlast ($h_{WL}$, $x_{RL}$) und den Werten der Raumluft ($\vartheta_{RSoll}$, $x_{R\ Soll}$) bestimmten Zuluftsollwert (ZU) gebildet werden, Bedarfsvektoren ($y_t$, $y_x$) für die Bedarfswerte anhand des aktuellen Zustand des Wärmerückgewinners (WRG) im h-x-Diagramm angelegt werden,
   und die spezifischen Enthalpien ($h_{LK}$, $h_{LE}$, $h_{LB}$) für die Endpunkte dieser Bedarfsvektoren ($y_x$, $y_t$) berechnet, mit den spezifischen Bewertungsfaktoren (k), die die Anpassung an die jeweilige Zielfunktion (F) realisieren, multipliziert werden und ein Wert der Zielfunktion (F) für den angestrebten Raumluftsollwert ($R_{Soll}$) berechnet wird
   und die Steuersignale ($u_{ij}$) sowie die Sollwerte der Raumluft ($R_{soll}$) so lange verändert werden, bis die Zielfunktion (F) ein Optimum annimmt.

4. Verfahren nach Anspruch 2 und 3, **dadurch gekennzeichnet, dass** beim Vorhandensein eines Wärmerückgewinners (WRG) und einer Mischkammer (MK) diese in Reihe geschaltet sind und das Verfahren auf beide Luftbehandlungsaggregate angewendet wird.

5. Verfahren nach einem der vorstehenden Ansprüche, **dadurch gekennzeichnet, dass** nach Ende einer Startphase die Wärmelast ($h_{WL}$) und der Feuchtelast ($x_{RL}$) aus der Differenz zwischen dem Zustand der Raumluft (R) und dem Zustand der Zuluft (ZU) bestimmt wird.

6. Verfahren nach einem der Ansprüche 1 oder 2, **dadurch gekennzeichnet, dass** für den Fall der Regelung der Raumtemperatur und -feuchte durch jeweils eine Kaskadenregelung die Wärmelast ($h_{WL}$) und der Feuchtelast ($x_{RL}$) aus den Differenzen der Raumsollwerte (Rsoll) und Zuluft (ZU) bestimmt wird.

7. Verfahren nach einem der vorstehenden Ansprüche, **dadurch gekennzeichnet, dass** in der Startphase der Klimaanlage die Berechnung der Wärmelast ($h_{WL}$) und der Feuchtelast ($x_{RL}$) abhängig vom Außenluftzustand (AU) vorgenommen wird.

8. Verfahren nach einem der vorhergehenden Ansprüche, **dadurch gekennzeichnet, dass** die Ermittlung der optimalen Steuersignale ($u_{ij}$) für die Luftbehandlungsaggregate (MK, WRG) und des optimalen Raumluftsollwertes ($\vartheta_{RSoll}$, $x_{R\,Soll}$) mittels eines mehrdimensionalen, nichtlinearen, unbeschränkten Optimierungsverfahrens erfolgt.

9. Verfahren nach Anspruch 8, **dadurch gekennzeichnet, dass**
das Optimierungsverfahren ein gradientenfreies Verfahren nach Nelder und Mead ist.

10. Verfahren nach einem der vorhergehenden Ansprüche, **dadurch gekennzeichnet, dass** die Ermittlung der optimalen Steuersignale ($u_{ij}$) und der optimalen Raumluftsollwerte ($\vartheta R_{Soll}$, $x_{R\,Soll}$) bei einem Überschreiten von Toleranzbändern

   - des Außenluftzustandes (AU),
   - der Zuluftistwerte (ZU),
   - der Raumluftistwerte (R),
   - der Raumlasten ($h_{WL}$, $x_{RL}$),

und/oder nach einer bestimmtem Zeitspanne aktiviert wird.

11. Verfahren nach einem der vorhergehenden Ansprüche, **dadurch gekennzeichnet, dass** in dem Fall, dass der Zulufttemperatursollwert ($\vartheta_{RSoll}$) allein mit der Mischkammer (MK) oder/und dem Wärmerückgewinner (WRG) zu erreichen ist, werden die Steuersignale ($u_{ij}$) für den Luftkühler (LK), den Lufterhitzer (LE) und/oder den Luftbefeuchter (LB) gesperrt, um unnötige Stellhandlungen zu vermeiden.

12. Klimaanlage zur Steuerung einer Lufttemperatur (t) und einer Luftfeuchte (x) in Räumen mittels einer elektronischer Steuerung und durch Luftbehandlungsaggregate, die mindestens einen Wärmerückgewinner (WRG) und/oder eine Mischkammer (MK) umfassen, in der ein Verfahren nach einem der vorhergehenden Ansprüche durchgeführt wird, **dadurch gekennzeichnet, dass** die elektronische Steuerung in mindestens einem programmierbaren Automatisierungsrechner implementiert ist und von ihm abgearbeitet wird.

13. Klimaanlage nach Anspruch 12, **dadurch gekennzeichnet, dass** der Automatisierungsrechner als speicherprogrammierbare Steuerung (SPS) realisiert ist.

**Claims**

1. Method for controlling an air temperature (t) and an air humidity (x) in rooms by means of an air conditioning system with electronic control, which includes as air handling units at least one heat recovery device (WRG) and/or a mixing chamber (MK) and also optionally an air cooler (LK), an air heater (LE) and/or an air humidifier (LB), by which control signals ($u_{ij}$) for the air handling units (MK, WRG, LK, LE, LB) are output while taking into account a comfort zone (BG) defined in an h-x diagram, a target function (F) being taken as a basis for carrying out the method, the parameters of which function are determined by specific enthalpies ($h_{LK}$, $h_{LE}$, $h_{LB}$), dependent on the control signals ($u_{ij}$), of the air handling units, the state of the outside air (AU), setpoint values of the state of the air in the room ($R_{set}$), and by specific assessment factors (k), such as commercial, financial and/or ecological operating variables of the air conditioning system, and an optimization of the target function (F) being performed,

wherein the target function (F) is a sum function of the specific enthalpies ($h_{LK}$, $h_{LE}$, $h_{LB}$), dependent on the control signals ($u_{ij}$), multiplied by the assessment factors (k),
**characterized in that**,
starting from values of the heat load ($h_{WL}$) and the moisture load ($x_{FL}$) of the room, a setpoint room-air value ($R_{set}$), which is determined by its temperature ($\theta_{Rset}$) and humidity ($X_{Rset}$), is ascertained at the limits, or within the comfort zone (BG) such that the target function (F) assumes an optimum,
and the control signals ($u_{ij}$) for the heat recovery device (WRG) and/or the mixing chamber (MK) are set such that the target function (F) assumes an optimum.

2. Method according to Claim 1, **characterized in that**, if a mixing chamber (MK) is present, to optimize the target function (F) a mixing point (M) is assumed in the h-x diagram on the straight line between the values of the outside air (AU) and the values of the setpoint room-air value ($R_{set}$), from which the requirement values for the temperature and/or humidity handling are formed as a vectorial difference between the mixing point (M) and the setpoint incoming-air value (ZU), determined by the room load ($h_{WL}$, $x_{FL}$) and the values of the air in the room ($\theta_{Rset}$, $x_{Rset}$), requirement vectors ($y_t$, $y_x$) for the requirement values are set to the mixing point (M) in the h-x diagram,
and the specific enthalpies ($h_{LK}$, $h_{LE}$, $h_{LB}$) for the end points of these requirement vectors ($y_x$, $y_t$) are calculated, multiplied by the specific assessment factors (k), which realize the matching to the respective target function (F), and a value of the target function (F) for the sought setpoint room-air value ($R_{set}$) is calculated
and the control signals ($u_{ij}$) and also the setpoint values of the air in the room ($R_{set}$) are changed until the target function (F) assumes an optimum.

3. Method according to Claim 1, **characterized in that**, if a heat recovery device (WRG) is present, to optimize the target function (F) an initial state of the heat recovery device ($WRG_{100}$) is determined in the h-x diagram, from which the requirement values for the temperature and/or humidity handling are formed as a vectorial difference between the current state of the heat recovery device (WRG) and the setpoint incoming-air value (ZU), determined by the room load ($h_{WL}$, $x_{FL}$) and the values of the air in the room ($\theta_{Rset}$, $x_{Rset}$),
requirement vectors ($y_t$, $y_x$) for the requirement values are set on the basis of the current state of the heat recovery device (WRG) in the h-x diagram, and the specific enthalpies ($h_{LK}$, $h_{LE}$, $h_{LB}$) for the end points of these requirement vectors ($y_x$, $y_t$) are calculated, multiplied by the specific assessment factors (k), which realize the matching to the respective target function (F), and a value of the target function (F) for the sought setpoint room-air value ($R_{set}$) is calculated
and the control signals ($u_{ij}$) and also the setpoint values of the air in the room ($R_{set}$) are changed until the target function (F) assumes an optimum.

4. Method according to Claims 2 and 3, **characterized in that**, in the presence of a heat recovery device (WRG) and a mixing chamber (MK), they are connected in series and the method is applied to both air handling units.

5. Method according to one of the preceding claims, **characterized in that**, after the end of a starting phase, the heat load ($h_{WL}$) and the moisture load ($x_{FL}$) are determined from the difference between the state of the air in the room (R) and the state of the incoming air (ZU).

6. Method according to either of Claims 1 and 2, **characterized in that**, for the case where the room temperature and humidity are regulated respectively by a cascade control, the heat load ($h_{wL}$) and the moisture load ($x_{FL}$) are determined from the differences of the room setpoint values ($R_{set}$) and the incoming air (ZU).

7. Method according to one of the preceding claims, **characterized in that**, in the starting phase of the air conditioning system, the calculation of the heat load ($h_{WL}$) and the moisture load ($x_{FL}$) is performed as dependent on the state of the outside air (AU).

8. Method according to one of the preceding claims, **characterized in that** the ascertainment of the optimum control signals ($u_{ij}$) for the air handling units (MK, WRG) and of the optimum setpoint room-air value ($\theta_{Rset}$, $x_{Rset}$) is performed by means of a multidimensional, non-linear, unrestricted optimization process.

9. Method according to Claim 8, **characterized in that** the optimization process is a gradient-free process according to Nelder and Mead.

10. Method according to one of the preceding claims, **characterized in that** the ascertainment of the optimum control signals ($u_{ij}$) and the optimum setpoint room-air values ($\theta_{Rset}$, $x_{Rset}$) is activated when tolerance bands

- of the state of the outside air (AU),
- of the actual incoming-air values (ZU),
- of the actual room-air values (R),
- of the room loads ($h_{WL}$, $x_{FL}$)

are exceeded and/or after a specific period of time.

11. Method according to one of the preceding claims, **characterized in that**, in the case where the setpoint incoming-air-temperature value ($\theta_{Rset}$) is to be achieved by the mixing chamber (MK) and/or the heat recovery device (WRG) alone, the control signals ($u_{ij}$) for the air cooler (LK), the air heater (LD) and/or the air humidifier (LB) are inhibited, in order to avoid unnecessary adjustment actions.

12. Air conditioning system for controlling an air temperature (t) and an air humidity (x) in rooms by means of an electronic control and by air handling units, which comprise at least a heat recovery device (WRG) and/or a mixing chamber (MK), in which a method according to one of the preceding claims is carried out, **characterized in that** the electronic control is implemented in at least one programmable automation computer and is run by it.

13. Air conditioning system according to Claim 12, **characterized in that** the automation computer is realized as a stored-program controller (SPC).

**Revendications**

1. Procédé de contrôle de la température (t) de l'air et de l'humidité (x) de l'air dans des locaux au moyen d'une installation de climatisation dotée d'une commande électronique qui contient comme ensembles de traitement d'air au moins un récupérateur de chaleur (WRG) et/ou une chambre de mélange (MK) ainsi que facultativement un refroidisseur d'air (LK), un réchauffeur d'air (LE) et/ou un humidificateur d'air (LB) par lesquels, en tenant compte d'une plage de confort (BG) définie dans un diagramme h-x, des signaux de commande (uij) des ensembles (MK, WRG, LK, LE, LB) de traitement d'air sont délivrés,

l'exécution du procédé étant basée sur une fonction cible (F) dont les paramètres sont définis par des enthalpies spécifiques (hLK, hLE, hLB) des ensembles de traitement d'air qui dépendent des signaux de commande (uij), par l'état (AU) de l'air extérieur, par des valeurs de consigne de l'état (RSoll) de l'air du local et par des facteurs spécifiques d'évaluation (k), par exemple des grandeurs économiques, financières et/ou écologiques de l'installation de climatisation,

une optimisation de la fonction cible (F) étant réalisée,

la fonction cible (F) étant une fonction de somme des enthalpies spécifiques (hLK, hLE, hLB) dépendant des signaux de commande (uij) multipliés par les facteurs d'évaluation (k),

**caractérisé en ce que**

partant de valeurs de la charge thermique ($h_{WL}$) et de la charge en humidité ($x_{FL}$) du local, une valeur de consigne (RSoll) de l'air du local définie par sa température ($\theta$RSoll) et son humidité (XRSoll) sur les limites ou à l'intérieur de la plage de confort (BG) est déterminée de telle sorte que la fonction cible (F) prenne un optimum et

**en ce que** les signaux de commande (uij) du récupérateur de chaleur (WRG) et/ou de la chambre de mélange (MK) sont ajustés de telle sorte que la fonction cible (F) prenne un optimum.

2. Procédé selon la revendication 1, **caractérisé en ce qu'**en cas de présence d'une chambre de mélange (MK), pour l'optimisation de la fonction cible (F), un point de mélange (M) depuis lequel les valeurs des besoins pour le traitement de la température et/ou de l'humidité sont formées en tant que différences vectorielles entre le point de mélange (M) et la valeur de consigne (ZU) de l'air d'amenée définie par la charge du local ($h_{WL}$, $x_{FL}$) et les valeurs de l'air du local ($\theta$RSoll, XRSoll) est pris dans le diagramme h-x sur les droites qui relient les valeurs de l'air extérieur (AU) et les valeurs de consigne (RSoll) de l'air du local, des vecteurs de besoin (yt, yx) des valeurs des besoins étant définis au point de mélange (M) dans le diagramme h-x, les enthalpies spécifiques ($h_{LK}$, $h_{LE}$, $h_{LB}$) des points d'extrémité de ces vecteurs de besoin ($y_x$, $y_t$) sont calculées, sont multipliées par les facteurs spécifiques d'évaluation (k) qui réalisent l'adaptation à la fonction cible (F) concernée et une valeur de la fonction cible (F) étant calculée pour la valeur de consigne ($R_{Soll}$) visée pour l'air du local et les signaux de commande ($u_{ij}$) ainsi que les valeurs de consigne de l'air du local ($R_{Soll}$) étant modifiés jusqu'à ce que la fonction cible (F) prenne un optimum.

3. Procédé selon la revendication 1, **caractérisé en ce qu'**en cas de présence d'un récupérateur de chaleur (WRG), pour l'optimisation de la fonction cible (F), un état initial du récupérateur de chaleur (WRG$_{100}$) depuis lequel les

valeurs des besoins pour le traitement de la température et/ou de l'humidité sont formées en tant que différences vectorielles entre l'état effectif du récupérateur de chaleur (WRG) et la valeur de consigne (ZU) de l'air d'amenée définie par la charge du local ($h_{WL}$, $x_{FL}$) et les valeurs de l'air du local ($\theta_{RSoll}$, $X_{RSoll}$) est défini dans le diagramme h-x, des vecteurs de besoin ($y_t$, $y_x$) des valeurs des besoins étant définies sur la base de l'état effectif du récupérateur de chaleur (WRG) dans le diagramme h-x, les enthalpies spécifiques ($h_{LK}$, $h_{LE}$, $h_{LB}$) des points d'extrémité de ces vecteurs de besoin ($y_x$, $y_t$) étant calculées et multipliées par les facteurs spécifiques d'évaluation (k) qui réalisent l'adaptation à la fonction cible (F) concernée et une valeur de la fonction cible (F) étant calculée pour la valeur de consigne ($R_{Soll}$) visée pour l'air du local et les signaux de commande ($u_{ij}$) ainsi que les valeurs de consigne de l'air du local ($R_{Soll}$) étant modifiés jusqu'à ce que la fonction cible (F) prenne un optimum.

**4.** Procédé selon les revendications 2 et 3, **caractérisé en ce qu'**en cas de présence d'un récupérateur de chaleur (WRG) et d'une chambre de mélange (MK), ces derniers sont raccordés en série et le procédé est appliqué sur les deux ensembles de traitement d'air.

**5.** Procédé selon l'une des revendications précédentes, **caractérisé en ce qu'**à la fin d'une phase de démarrage, la charge thermique ($h_{WL}$) et la charge en humidité ($x_{FL}$) sont déterminées à partir de la différence entre l'état de l'air du local (R) et l'état de l'air d'amenée (ZU).

**6.** Procédé selon l'une des revendications 1 ou 2, **caractérisé en ce qu'**au cas où la régulation de la température et de l'humidité du local s'effectue par des régulations en cascade respectives, la charge thermique ($h_{WL}$) et la charge en humidité ($x_{FL}$) sont déterminées à partir des différences entre les valeurs ($R_{Soll}$) de consigne du local et l'air d'amenée (ZU).

**7.** Procédé selon l'une des revendications précédentes, **caractérisé en ce qu'**au cours de la phase de démarrage de l'installation de climatisation, le calcul de la charge thermique ($h_{WL}$) et de la charge en humidité ($x_{FL}$) est réalisé en fonction de l'état (AU) de l'air extérieur.

**8.** Procédé selon l'une des revendications précédentes, **caractérisé en ce que** la détermination des signaux de commande optimaux ($u_{ij}$) des ensembles (MK, WRG) de traitement d'air et de la valeur de consigne optimale ($\theta_{RSoll}$, $X_{RSoll}$) de l'air du local s'effectue au moyen d'un procédé d'optimisation multidimensionnel, non linéaire et non limité.

**9.** Procédé selon la revendication 8, **caractérisé en ce que** le procédé d'optimisation est un procédé sans gradient selon Nelder et Mead.

**10.** Procédé selon l'une des revendications précédentes, **caractérisé en ce que** la détermination des signaux de commande optimaux ($u_{ij}$) et des valeurs optimales ($\theta_{RSoll}$, $X_{RSoll}$) de consigne de l'air du local est activée par un dépassement des plages de tolérance de l'état (AU) de l'air extérieur,
des valeurs effectives (ZU) de l'air amené,
des valeurs effectives (R) de l'air du local,
des charges du local ($h_{WL}$, $X_{FL}$) et/ou après une durée définie.

**11.** Procédé selon l'une des revendications précédentes, **caractérisé en ce qu'**au cas où la température de consigne ($\theta_{RSoll}$) de la température de l'air d'amenée doit être atteinte uniquement avec la chambre de mélange (MK) et/ou le récupérateur de chaleur (WRG), les signaux de commande ($u_{ij}$) du refroidisseur d'air (LK), du réchauffeur d'air (LE) et/ou de l'humidificateur d'air (LB) sont bloqués pour éviter des opérations de réglage inutile.

**12.** Installation de climatisation destinée à contrôler la température (t) de l'air et l'humidité (x) de l'air dans des locaux au moyen d'une commande électronique et par des ensembles de traitement d'air qui comprennent au moins un récupérateur de chaleur (WRG) et/ou une chambre de mélange (MK) et dans lequel un procédé selon l'une des revendications précédentes est exécuté, **caractérisée en ce que**
la commande électronique est mise en oeuvre dans au moins un calculateur d'automatisation programmable et est réalisée par ce dernier.

**13.** Installation de climatisation selon la revendication 12, **caractérisée en ce que** le calculateur d'automatisation est configuré comme commande programmable (SPS) à mémoire.

# Fig. 1

# Fig. 2

**Fig. 3**

**Fig. 4**

## Fig. 5

**Fig. 6**

EP 2 667 278 B1

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0786712 A2
- EP 1209547 A2